# EUROPEAN PATENT APPLICATION

(11) **EP 4 006 716 A1**
(43) Date of publication of application: **01.06.2022**
(21) Application number: 20844769.8
(22) Date of filing: 21.07.2020
(51) Int. Cl.: G06F 8/41, G06F 21/44, G16Y 30/00

(54) **COMPUTING SYSTEM AND INFORMATION PROCESSING METHOD**

(30) Priority: 22.07.2019 JP 2019134554
(71) Applicant: CONNECTFREE CORPORATION, Kyoto-shi, Kyoto 600-8009 (JP)
(72) Inventor: TATE, Kristopher Andrew, Kyoto-shi, Kyoto 600-8009 (JP)
(74) Representative: Boult Wade Tennant LLP
(86) International application number: PCT/JP2020/028185
(87) International publication number: WO 2021/015182

(57) **Abstract**

A computing system includes: a computing device including a processor; and a software development device for creating an application program executed by the computing device. The software development device includes a first compiler that compiles a source including one or more instructions and data to be processed to generate an intermediate code. The computing device includes a second compiler that generates a machine code by reflecting a hardware configuration of the computing device in the one or more instructions included in the intermediate code. The processor of the computing device executes the generated machine code after the machine code is generated.

## Description

### TECHNICAL FIELD

The present disclosure relates to a computing system and an information processing method.

### BACKGROUND ART

The development of information and communication technology (ICT) has been remarkable in recent years, and devices connected to a network, such as the Internet, are not limited to information processing devices, such as conventional personal computers or smartphones, and are spreading to various things. Such a technology trend is called "IoT (Internet of Things)", and various technologies and services have been proposed and put into practical use. In the future, a world is envisioned in which billions of people on Earth and tens of billions or trillions of devices are connected at the same time. In order to realize such a networked world, it is necessary to provide a solution that is simpler, safer, and more freely connected.

With the intelligentization of devices used in IoT (also referred to as "edge devices"), it is necessary to create various kinds of application programs. On the other hand, a situation is expected in which there are various types of edge devices and the hardware specifications and the like are also frequently changed.

For example, JP 2004-038956 A discloses a system for discovering and showing computing resources available in various computing devices and for exposing these resources as services that can be addressed by software applications.

### CITATION LIST

### PATENT DOCUMENT

Patent Document 1: JP 2004-038956 A

### SUMMARY OF THE INVENTION

### PROBLEM TO BE SOLVED BY THE INVENTION

It is preferable that such an application program can be created without being aware of the resources available to each computing device as disclosed in JP 2004-038956 A (Patent Document 1) described above.

A typical object of the present disclosure is to provide a solution that enables an application program to be created without being aware of the hardware configuration of a computing device and enables the execution of processing according to the hardware configuration of each computing device.

### MEANS FOR SOLVING PROBLEM

A computing system according to an aspect of the present disclosure includes: a computing device including a processor; and a software development device for creating an application program executed by the computing device. The software development device includes a first compiler that compiles a source including one or more instructions and data to be processed to generate an intermediate code. The computing device includes a second compiler that generates a machine code by reflecting a hardware configuration of the computing device in the one or more instructions included in the intermediate code. The processor of the computing device executes the generated machine code after the machine code is generated.

The intermediate code may include a digital certificate for the intermediate code and an authentication instruction for executing an authentication process based on the digital certificate. By executing the machine code, the authentication process based on the digital certificate may be realized by the authentication instruction.

The intermediate code may include content, copyright management information for managing a copyright of the content, and a management instruction for executing copyright management based on the copyright management information. By executing the machine code, it may be determined whether or not the content is available based on the copyright management information by the management instruction.

The second compiler may include a management module for updating data referenced by the second compiler.

The intermediate code may include auxiliary information for assisting generation of the machine code by the second compiler.

According to another aspect of the present disclosure, there is provided an information processing method executed in a computing system including a computing device including a processor and a software development device for creating an application program executed by the computing device. The information processing method includes: a step in which the software development device compiles a source including one or more instructions and data to be processed to generate an intermediate code; a step in which the computing device generates a machine code by reflecting a hardware configuration of the computing device in the one or more instructions included in the intermediate code; and a step in which the processor of the computing device executes the generated machine code after the machine code is generated.

### EFFECT OF THE INVENTION

According to the present disclosure, an application program can be created without being aware of the hardware configuration of the computing device, and processing can be executed according to the hardware configuration of each computing device.

### BRIEF DESCRIPTION OF DRAWINGS

Fig. 1 is a schematic diagram showing an example of the overall configuration of an IoT system according to the present embodiment;
Fig. 2 is a schematic diagram showing a hardware configuration example of a software development device according to the present embodiment;
Fig. 3 is a schematic diagram showing a hardware configuration example of a controller according to the present embodiment;
Fig. 4 is a schematic diagram for describing a functional procedure relevant to the execution of an application program in the IoT system according to the present embodiment;
Fig. 5 is a diagram for describing an example of generating an intermediate code in the IoT system according to the present embodiment;
Fig. 6 is a diagram for describing an example of an intermediate code in the IoT system according to the present embodiment;
Fig. 7 is a diagram for describing processing relevant to the generation of a machine code from an intermediate code shown in Fig. 6;
Fig. 8 is a flowchart showing a processing procedure of a process executed in the IoT system according to the present embodiment;
Fig. 9 is a diagram showing an example of an intermediate code in the IoT system according to the present embodiment;
Fig. 10 is a diagram showing another example of an intermediate code in the IoT system according to the present embodiment; and
Fig. 11 is a schematic diagram for describing an update/addition process of a controller in the IoT system according to the present embodiment.

### MODE(S) FOR CARRYING OUT THE INVENTION

An embodiment according to the present disclosure will be described in detail with reference to the diagrams. In addition, the same or corresponding portions in the diagrams are denoted by the same reference numerals, and the description thereof will not be repeated.

In the following description, as a typical example of a computing system, an IoT system 1 including an edge device 2 and a software development device 100 will be described. However, the computing system of the present disclosure can be applied to any system without being limited to the IoT system 1.

### <A. IoT system 1>

First, the overall configuration of the IoT system 1 including the software development device 100 according to the present embodiment and the edge device 2 will be described.

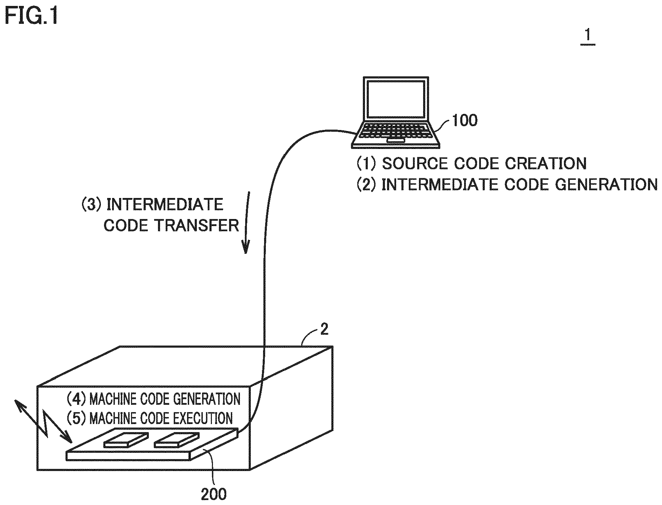

Fig. 1 is a schematic diagram showing an example of the overall configuration of the IoT system 1 according to the present embodiment. Referring to Fig. 1, in the IoT system 1, typically, an application program (intermediate code) executed by the edge device 2 is generated by the software development device 100. The generated application program is transferred from the software development device 100 to the controller 200 included in the edge device 2. The controller 200 generates a machine code (or an assembler code) from the intermediate code and executes the generated machine code.

The software development device 100 is used to create an application program executed by the edge device 2 (controller 200 included in the edge device 2). An integrated development environment (IDE) is provided for the software development device 100, so that the user can create an arbitrary application program in the integrated development environment.

The controller 200 included in the edge device 2 is an example of a computing device, and includes a processor. The edge device 2 may be any device, but typically, factory facilities, various devices in the home, social infrastructure equipment, movable bodies such as vehicles, arbitrary portable devices, and the like are assumed. As will be described later, the controller 200 has a processor, so that it is possible to execute an application program from the software development device 100.

An example of the processing procedure in the IoT system 1 will be described. First, the user creates a source code by using the software development device 100 ((1) source code creation). Then, the created source code is compiled in the software development device 100 to generate an intermediate code ((2) intermediate code generation). The generated intermediate code is transferred to the controller 200 of the edge device 2 ((3) intermediate code transfer). The transferred intermediate code is converted into a machine code by the controller 200 ((4) machine code generation) and executed by the controller 200 ((5) machine code execution).

By such a procedure, any application program developed by the software development device 100 can be executed by the controller 200.

### <B. Hardware configuration example>

Next, a hardware configuration example of a device included in the IoT system 1 according to the present embodiment will be described.

### (b1: Software development device 100)

The software development device 100 is typically realized by a general-purpose computer.

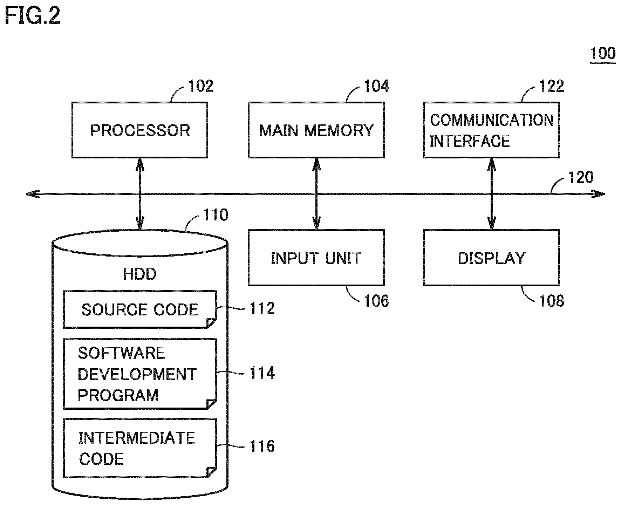

Fig. 2 is a schematic diagram showing a hardware configuration example of the software development device 100 according to the present embodiment. Referring to Fig. 2, the software development device 100 includes a processor 102, a main memory 104, an input unit 106, a display 108, a hard disk 110, and a communication interface 122 as main components. These components are connected to each other through an internal bus 120.

The processor 102 may be, for example, a CPU (Central Processing Unit) or a GPU (Graphics Processing Unit). A plurality of processors 102 may be disposed, or the processor 102 having a plurality of cores may be adopted.

The main memory 104 is a volatile storage device, such as a DRAM (Dynamic Random Access Memory) or a SRAM (Static Random Access Memory). The hard disk 110 holds various kinds of data or various programs executed by the processor 102. In addition, instead of the hard disk 110, a non-volatile storage device such as an SSD (Solid State Drive) or a flash memory may be adopted. Among the programs stored in the hard disk 110, a designated machine code is loaded to the main memory 104, and the processor 102 sequentially executes computer-readable instructions included in the machine code loaded to the main memory 104 to realize various functions described later.

Typically, the hard disk 110 stores a source code 112 arbitrarily created by the user, a software development program 114 for realizing an integrated development environment, and an intermediate code 116 generated from the source code 112. The software development program 114 generates the intermediate code 116 from the source code 112 arbitrarily created by the user, and includes a module for providing an application program development environment.

The input unit 106 receives an input operation of the user who operates the software development device 100. The input unit 106 may be, for example, a keyboard, a mouse, a touch panel disposed on a display device, or an operation button disposed on the housing of the software development device 100.

The display 108 displays the processing result of the processor 102 and the like. The display 108 may be, for example, an LCD (Liquid Crystal Display) or an organic EL (Electro-Luminescence) display.

The communication interface 122 is in charge of data exchange with the controller 200. Examples of the communication interface 122 include wired connection terminals, such as serial ports including a USB (Universal Serial Bus) port and an IEEE1394 and a legacy parallel port. Alternatively, the communication interface 122 may include an Ethernet (registered trademark) port.

In addition, the entirety or part of the software development device 100 may be realized by using a hardwired circuit such as an ASIC (Application Specific Integrated Circuit) in which a circuit corresponding to computer-readable instructions is provided. In addition, the entirety or part of the software development device 100 may be realized by using a circuit corresponding to computer-readable instructions on an FPGA (fieldprogrammable gate array). In addition, the entirety or part of the software development device 100 may be realized by appropriately combining the processor 102, a main memory, an ASIC, an FPGA, and the like.

The software development device 100 may further include a component for reading the stored program or the like from the non-transitory media that stores the software development program 114 including computer-readable instructions. The media may be, for example, an optical medium, such as a DVD (Digital Versatile Disc), or a semiconductor medium, such as a USB memory.

In addition, the software development program 114 may not only be installed on the software development device 100 through the media, but also be provided from a distribution server on the network.

### (b2: Controller 200)

The controller 200 may be realized by using a general-purpose computer, or may be realized by using a semiconductor substrate including components necessary for realizing processing.

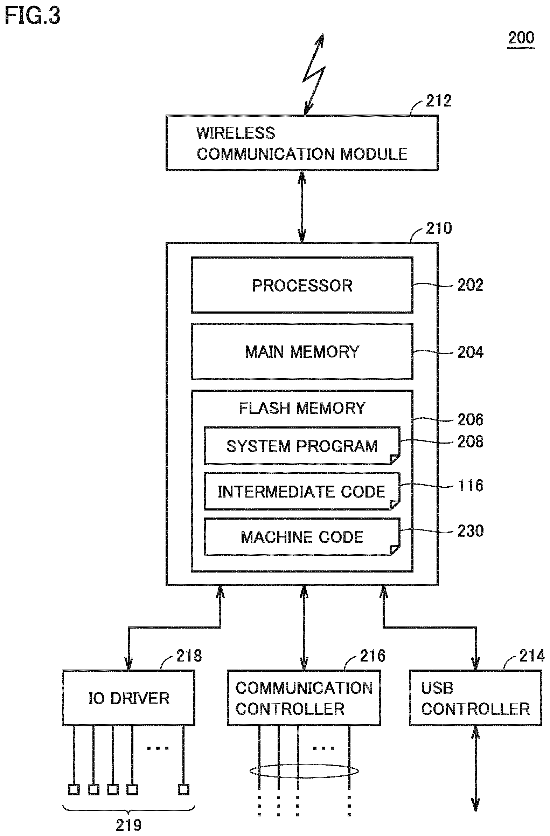

Fig. 3 is a schematic diagram showing a hardware configuration example of the controller 200 according to the present embodiment. Referring to Fig. 3, the controller 200 includes, as main components, an arithmetic processing unit 210, a wireless communication module 212, a USB controller 214, a communication controller 216, and an IO driver 218 electrically connected to one or more pads 219.

The arithmetic processing unit 210 is a calculation unit that executes a program, and includes a processor 202, a main memory 204, and a flash memory 206 as main components. The processor 202 is, for example, a CPU or a GPU. A plurality of processors 202 may be disposed, or the processor 202 having a plurality of cores may be adopted. The main memory 204 is a volatile storage device, such as a DRAM or an SRAM. The flash memory 206 is a non-volatile storage device that holds a program executed by the processor 202 or necessary data. Among the programs stored in the flash memory 206, a designated program is loaded to the main memory 204 and executed by the processor 202 to realize various functions.

Typically, the flash memory 206 stores an intermediate code 116 provided by the software development device 100 and a system program 208 for realizing a process such as generating a machine code 230 from the intermediate code 116.

The wireless communication module 212 is in charge of wireless data exchange with any other device. The wireless communication module 212 may include processing circuits and antennas for wireless communication with devices, routers, mobile base stations, and the like. The wireless communication supported by the wireless communication module 212 may be any of Wi-Fi (registered trademark), Bluetooth (registered trademark), ZigBee (registered trademark), LPWA (Low Power Wide Area), GSM (registered trademark), W-CDMA, CDMA200, LTE (Long Term Evolution), and 5th generation mobile communication system (5G), for example.

The USB controller 214 is in charge of data exchange with the software development device 100. The communication controller 216 is in charge of wired data exchange with any other device. The communication controller 216 may be compatible with known data exchange methods, such as serial communication, parallel communication, and GPIO (General-purpose input/output).

The IO driver 218 is in charge of exchanging electrical signals with an arbitrary device electrically connected through the pad 219. The IO driver 218 outputs an electrical signal according to a command from the arithmetic processing unit 210. In addition, the IO driver 218 detects an electrical signal given through the pad 219 and outputs the detection result to the arithmetic processing unit 210. More specifically, the IO driver 218 is configured to include a signal generation circuit, a signal detection circuit, a buffer circuit, and the like.

The controller 200 may be driven by electric power from a battery (not shown).

### <C. Execution of application program on controller 200>

In the IoT system 1 according to the present embodiment, the intermediate code 116 is provided to the controller 200, and the controller 200 generates the machine code 230 from the intermediate code 116 and executes the machine code 230.

In the present specification, the "intermediate code" includes an instruction for executing a process at a distribution destination, such as a controller, and data necessary for executing the instruction. The "intermediate code" is generated so as to conform to a predetermined execution environment (typically, the execution environment of a virtual processor) without depending on the computer architecture, execution environment, and the like of the distribution destination. That is, the "intermediate code" is generated according to the same coding rules regardless of the computer architecture of the distribution destination. Then, the machine code 230 is generated from the "intermediate code" so as to match the computer architecture of the distribution destination. The "intermediate code" can be executed on a virtual processor, but in general, it is possible to use computer resources more efficiently and speed up processing by using the machine code generated from the "intermediate code". The expression of "intermediate code" may be anything. The "intermediate code" is sometimes called an "intermediate representation".

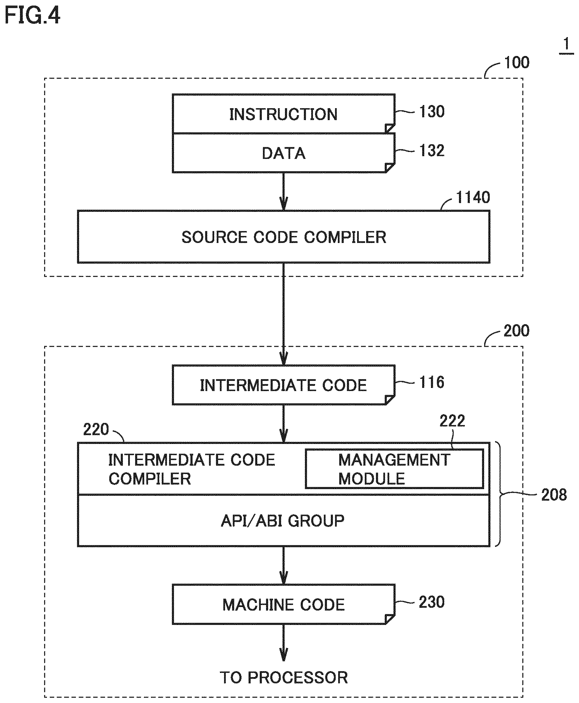

Fig. 4 is a schematic diagram for describing a functional procedure relevant to the execution of an application program in the IoT system 1 according to the present embodiment. Referring to Fig. 4, in the IoT system 1, the intermediate code 116 corresponding to the application program generated in the software development device 100 is provided to the controller 200, and is executed after being converted into the machine code 230 in the controller 200.

More specifically, the software development device 100 has a source code compiler 1140. The source code compiler 1140 may be realized by the processor 102 of the software development device 100 executing the software development program 114.

An instruction sequence 130 and/or data 132 created by the user is input to the source code compiler 1140. The source code compiler 1140 interprets each instruction sequence 130 to generate the intermediate code 116 in a binary format. Thus, the source code compiler 1140 compiles the source including the instruction sequence 130, which includes one or more instructions, and data to be processed to generate the intermediate code 116. The generated intermediate code 116 is transmitted from the software development device 100 to the controller 200 by using an arbitrary method.

The controller 200 includes an intermediate code compiler 220 and an API/ABI group 224. These components are included as a part of the system program 208, and are provided by the processor 202 of controller 200 executing the system program 208.

The intermediate code compiler 220 interprets the intermediate code 116 to generate the machine code 230. More specifically, the intermediate code compiler 220 generates the machine code 230 by reflecting the hardware configuration of the controller 200 in the instruction sequence 130 including one or more instructions included in the intermediate code 116. The intermediate code compiler 220 includes a management module 222, and executes processing necessary for generating the machine code 230 according to a special instruction included in the intermediate code 116 (detailed processing example will be described later).

The API/ABI group 224 provides an API (Application Programming Interface) and an ABI (Application Binary Interface) for associating an instruction or a function described in the intermediate code 116 with a system. The intermediate code compiler 220 interprets the intermediate code 116 and generates the machine code 230 with reference to the API/ABI group 224. The API/ABI group 224 may include a driver for controlling hardware or various kinds of setting information.

The generated machine code 230 is sequentially executed by the processor 202 of the controller 200. That is, after the machine code 230 is generated, the processor 202 of the controller 200 executes the generated machine code 230.

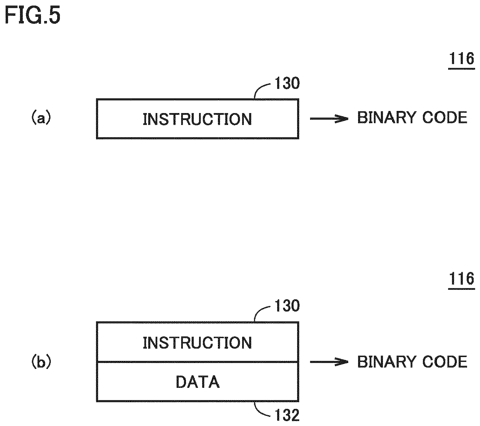

Fig. 5 is a diagram for describing an example of generating the intermediate code 116 in the IoT system 1 according to the present embodiment. Fig. 5(a) shows an example in which the intermediate code 116 is generated from the instruction sequence 130. Fig. 5(b) shows an example in which the intermediate code 116 is generated from the data 132 required for processing in addition to the instruction sequence 130.

The data 132 is provided according to the purpose and use of the application program. For example, when an application program for displaying an arbitrary image is assumed, an instruction for internally generating an image and the content for displaying and outputting the image are described in the instruction sequence 130. In addition, the data 132 may include raster data or vector data for defining an image.

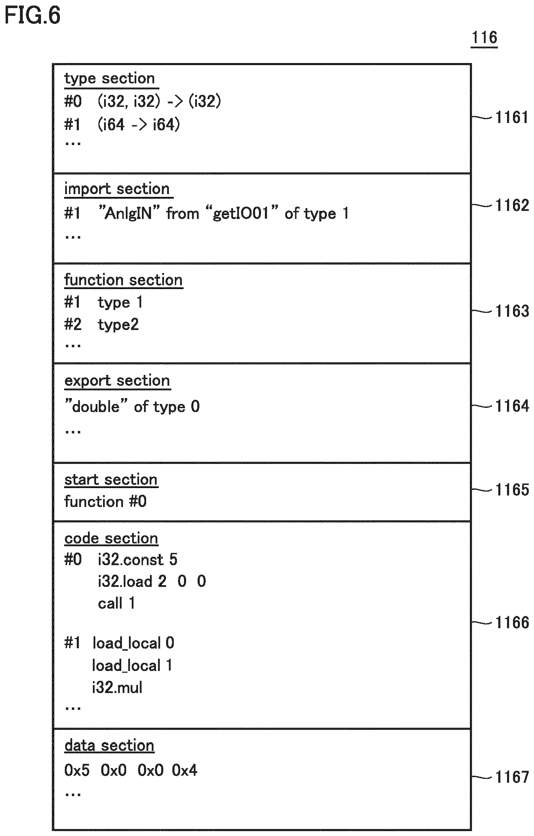

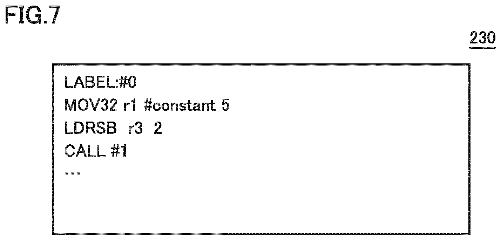

Next, processing for conversion from the intermediate code 116 to the machine code 230 will be described with reference to Figs. 6 and 7.

Fig. 6 is a diagram for describing an example of the intermediate code 116 in the IoT system 1 according to the present embodiment. Fig. 7 is a diagram for describing the processing relevant to the generation of the machine code 230 from the intermediate code 116 shown in Fig. 6.

As an example, Figs. 6 and 7 show an example of a process of displaying a figure drawn according to the definition specified in the data 132. In addition, for convenience of explanation, although the code is described in the form of a pseudo-instruction in Figs. 6 and 7, the code is actually processed in the binary format.

The intermediate code 116 includes a portion corresponding to the instruction sequence 130 (see Fig. 4) and a portion corresponding to the data 132 (see Fig. 4). An example of the intermediate code 116 shown in Fig. 6 includes several compartmentalized sections.

More specifically, the intermediate code 116 includes a type section 1161, an import section 1162, a function section 1163, an export section 1164, a start section 1165, a code section 1166, and a data section 1167.

The type section 1161 includes the specification of a function signature, such as the definition of a type referenced in the target program. The import section 1162 includes the definition of an external program or library referenced in the target program. The function section 1163 includes the definition of a function specified in the target program. The export section 1164 includes the definition of a function that is opened when the target program is referenced from an external program or the like. The start section 1165 includes the definition of the index of a function referenced in the target program. The code section 1166 is a portion substantially corresponding to the instruction sequence 130, and includes one or more instructions. The code section 1166 can include any kind of instruction. For example, in addition to general-purpose arithmetic processing, data access, file access, and the like, instructions for realizing communication with other controllers, servers, and the like (for example, inter-process communication) can be included.

The data section 1167 includes the definition of data to be processed by one or more instructions defined in the code section 1166. The data section 1167 may include any kind of data. For example, information for constructing a communication stack or information such as a digital certificate may be included in the data section 1167.

Referring to Fig. 7, the machine code 230 includes one or more instructions described by an instruction set that can be interpreted by the processor 202 of the controller 200. That is, the type of instruction set that defines the machine code 230 is determined according to the type of the processor 202 of the controller 200 and the like.

As described above, in the IoT system 1 according to the present embodiment, the intermediate code 116 is converted into the machine code 230 according to the execution environment and then executed in each controller 200. Therefore, it is possible to provide an application program that can be executed by various controllers 200 using the same source code. In addition, since the executable machine code 230 is generated according to the environment or hardware of the controller 200, compatibility and the like can be maintained even when the hardware specifications of the controller 200 are changed.

### <D. Processing procedure>

Next, the processing procedure of a process executed in the IoT system 1 according to the present embodiment will be described.

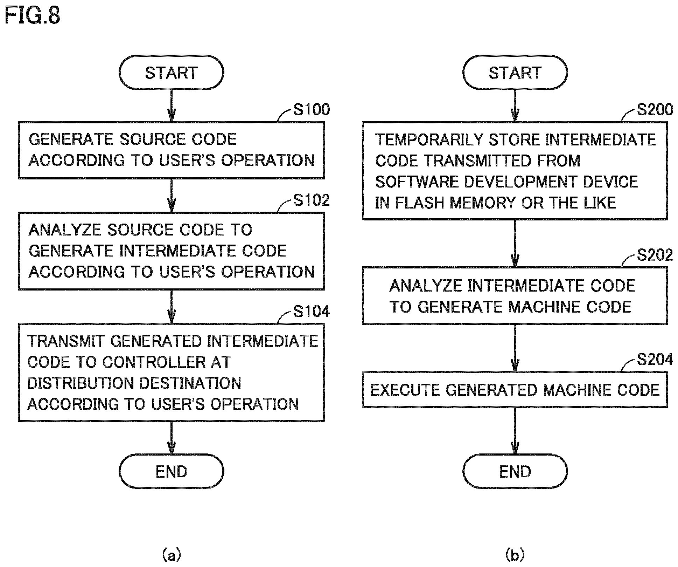

Fig. 8 is a flowchart showing the processing procedure of the process executed in the IoT system 1 according to the present embodiment. Fig. 8(a) shows the procedure of a process executed by the software development device 100, and Fig. 8(b) shows the procedure of a process executed by the controller 200.

Referring to Fig. 8(a), the software development device 100 generates the source code 112 according to the user's operation (step S100). Then, the software development device 100 analyzes the source code 112 to generate the intermediate code 116 according to the user's operation (step S102). More specifically, the software development device 100 executes a process of generating the intermediate code 116 by compiling a source including the instruction sequence 130 including one or more instructions and the data 132 to be processed.

Then, the software development device 100 transmits the generated intermediate code 116 to the controller 200 at the distribution destination according to the user's operation (step S104).

Referring to Fig. 8(b), the controller 200 temporarily stores the intermediate code 116 transmitted from the software development device 100 in the flash memory 206 or the like (step S200). Then, when an explicit instruction is received from the outside or predetermined conditions are satisfied, the controller 200 analyzes the intermediate code 116 to generate the machine code 230 (step S202). More specifically, the controller 200 executes a process of generating the machine code 230 by reflecting the hardware configuration of the controller 200 in the instruction sequence 130 including one or more instructions included in the intermediate code 116.

Then, the controller 200 executes the generated machine code 230 (step S204). That is, after the machine code 230 is generated, the processor 202 of the controller 200 executes the generated machine code 230. The execution of the machine code 230 by the processor 202 (processing in step S204) may be repeated a predetermined number of times.

When the machine code 230 is generated from the intermediate code 116, the generated machine code 230 can be used as long as the hardware configuration of the controller 200 is not changed. Therefore, in the case of an application that is repeatedly executed, the machine code 230 may be automatically generated when the intermediate code 116 is received.

### <E. Authentication process>

In order to enhance the security for the intermediate code 116 provided to the controller 200, an authentication process for the intermediate code 116 may be added.

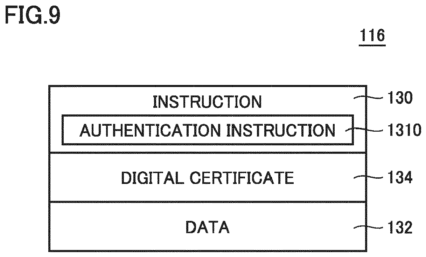

Fig. 9 is a diagram showing an example of the intermediate code 116 in the IoT system 1 according to the present embodiment. The intermediate code 116 shown in Fig. 9 includes a digital certificate 134 given by the software development device 100 or the entity that provides the intermediate code 116, in addition to the instruction sequence 130 and the data 132 created by the user.

The digital certificate 134 includes a hash value generated by using the digital certificate held by the entity who has given the digital certificate 134 to the intermediate code 116.

The intermediate code 116 may be authenticated by executing the machine code 230 generated from the intermediate code 116 in the controller 200. For example, an authentication instruction 1310 may be included in the instruction sequence 130, and the authentication process using the digital certificate 134 may be executed by executing the authentication instruction 1310.

As described above, the intermediate code 116 may include the digital certificate 134 for the intermediate code 116 and the authentication instruction 1310 for executing the authentication process based on the digital certificate 134. Then, by executing the machine code 230 generated from the intermediate code 116, the authentication process based on the digital certificate 134 may be realized by the authentication instruction 1310.

Instead of the implementation described above, a function for authenticating the digital certificate 134 may be added to the system program 208 of the controller 200.

By using such an authentication function implemented in the controller 200, it is possible to ensure the correctness, authenticity, or the like of the intermediate code 116.

### <F. Copyright management>

A function for realizing copyright management for the digital content included in the intermediate code 116 provided to the controller 200 may be added.

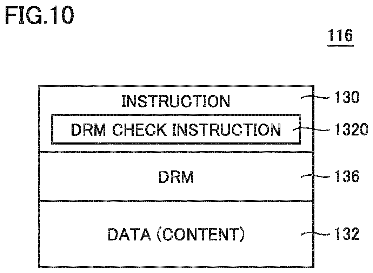

Fig. 10 is a diagram showing another example of the intermediate code 116 in the IoT system 1 according to the present embodiment. The intermediate code 116 shown in Fig. 10 includes a DRM 136 for copyright management of the content included in the data 132, in addition to the instruction sequence 130 created by the user and the data 132 including the content.

The DRM 136 may be typically issued by an organization that manages the copyright, or may be generated and given by the software development device 100 or the like when the creator himself or herself of the intermediate code 116 manages the copyright.

In the controller 200, by referring to the DRM 136, it can be determined whether or not the use of the content included in the intermediate code 116 is proper use. For example, copyright management based on the DRM 136 may be realized by making a DRM check instruction 1320 be included in the instruction sequence 130 and executing the DRM check instruction 1320. Alternatively, a function for realizing copyright management based on the DRM 136 may be added to the system program 208 of the controller 200.

The intermediate code 116 shown in Fig. 10 includes the data 132 including the content, the DRM 136 that is copyright management information for copyright management of the content, and the DRM check instruction 1320 that is a management instruction for executing copyright management based on the DRM 136. Then, by executing the machine code 230 generated from the intermediate code 116, it is determined whether or not the content is available based on the DRM 136 by the DRM check instruction 1320.

By using such a copyright management function implemented in the controller 200, it is possible to guarantee the proper use of the content included in the intermediate code 116.

### <G. Update/add>

The controller 200 may update or add the API/ABI group 224, the library, and the like necessary for generating the machine code 230 from the intermediate code 116 in the controller 200.

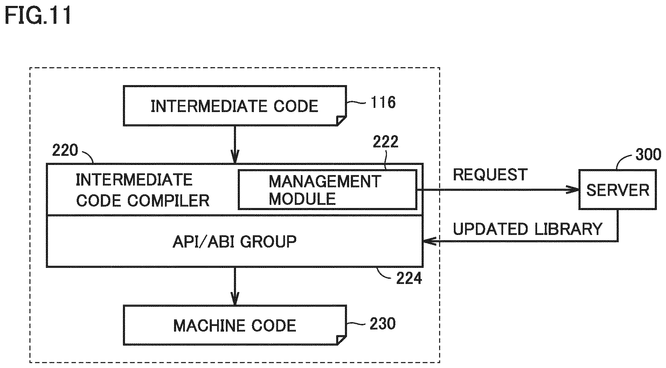

Fig. 11 is a schematic diagram for describing an update/addition process of the controller 200 in the IoT system 1 according to the present embodiment. Referring to Fig. 11, when an instruction, a function, or the like that cannot be resolved is found in interpreting the intermediate code 116, the intermediate code compiler 220 of the controller 200 may acquire necessary libraries, definitions, and the like from an external server 300.

Specifically, the management module 222 of the intermediate code compiler 220 transmits a request for acquiring libraries, definitions, and the like necessary for generating the machine code 230 from the intermediate code 116 to the external server 300, and adds an update library and the like provided by the external server 300 to the API/ABI group 224. As described above, the intermediate code compiler 220 includes the management module 222 for updating the data referred to by the intermediate code compiler 220.

In the IoT system 1 according to the present embodiment, the controller 200 automatically acquires the necessary libraries, definitions, and the like, and then generates the machine code 230 from the intermediate code 116. Therefore, in the software development device 100, the user does not need to be aware of the environment in which the application program is executed.

In addition, the execution environment (system program 208) itself of the controller 200 may be updated. In this case, the intermediate code 116 includes an instruction for updating the system program and an updated program. By converting such an intermediate code 116 into the machine code 230 and executing the machine code 230 in the controller 200, the execution environment itself of the controller 200 itself can be updated at any time.

### <H. Processing for compressing intermediate code 116>

Generally, since the intermediate code 116 is redundant as compared with the machine code 230, the intermediate code 116 may be data-compressed for the purpose of facilitating distribution to the controller 200.

As a data compression method, a known compression technique can be used. Alternatively, the intermediate code 116 (intermediate representation) generated by compiling the source code 112 may be data-compressed using an abbreviated representation and then converted into a binary format. In this case, information indicating the correspondence between the expression originally used in the intermediate representation and the abbreviated representation may be added to the intermediate code 116 and then provided to the controller 200.

### <I. Auxiliary information>

As described above, the intermediate code 116 is generated so as to conform to a predetermined execution environment without depending on the computer architecture, execution environment, and the like of the distribution destination. However, since it is finally necessary to generate the machine code 230 executed by the processor of the distribution destination, the auxiliary information (advance information) that assists the generation of the machine code 230 at the distribution destination may be included in the intermediate code 116.

As such auxiliary information, any information can be included. However, for example, specification of optimization options when running on a specific processor, a pre-designed memory map, and the like may be included.

### <J. Modification example>

In the embodiment described above, an example is shown in which the intermediate code 116 is directly transmitted from the software development device 100 to the controller 200, but the configuration is not limited to such a one-to-one configuration. For example, the intermediate code 116 generated by the software development device 100 may be uploaded to the server, and the intermediate code 116 may be distributed by downloading the intermediate code 116 from the server by any controller 200.

### <K. Advantages>

According to the IoT system 1 according to the present embodiment, an application program can be created without being aware of the hardware configuration of the controller 200, and processing can be executed according to the hardware configuration of each controller 200.

It should be considered that the embodiment disclosed is an example in all points and not restrictive. The scope of the present invention is defined by the claims rather than the above description, and is intended to include all modifications within the scope and meaning equivalent to the claims.

### EXPLANATIONS OF LETTERS OR NUMERALS

- 1: IoT SYSTEM
- 2: EDGE DEVICE
- 100: SOFTWARE DEVELOPMENT DEVICE
- 102, 202: PROCESSOR
- 104, 204: MAIN MEMORY
- 106: INPUT UNIT
- 108: DISPLAY
- 110: HARD DISK
- 112: SOURCE CODE
- 114: SOFTWARE DEVELOPMENT PROGRAM
- 116: INTERMEDIATE CODE
- 120: INTERNAL BUS
- 122: COMMUNICATION INTERFACE
- 130: INSTRUCTION SEQUENCE
- 132: DATA
- 134: DIGITAL CERTIFICATE
- 200: CONTROLLER
- 206: FLASH MEMORY
- 208: SYSTEM PROGRAM
- 210: ARITHMETIC PROCESSING UNIT
- 212: WIRELESS COMMUNICATION MODULE
- 214: USB CONTROLLER
- 216: COMMUNICATION CONTROLLER
- 218: IO DRIVER
- 219: PAD
- 220: COMPILER
- 222: MANAGEMENT MODULE
- 224: API/ABI GROUP
- 230: MACHINE CODE
- 300: SERVER
- 1140: SOURCE CODE COMPILER
- 1310: AUTHENTICATION INSTRUCTION
- 1320: CHECK INSTRUCTION

## Claims

1. A computing system, comprising:
a computing device including a processor; and
a software development device for creating an application program executed by the computing device,
wherein the software development device includes a first compiler that compiles a source including one or more instructions and data to be processed to generate an intermediate code,
the computing device includes a second compiler that generates a machine code by reflecting a hardware configuration of the computing device in the one or more instructions included in the intermediate code, and
the processor of the computing device executes the generated machine code after the machine code is generated.

2. The computing system according to claim 1,
wherein the intermediate code includes a digital certificate for the intermediate code and an authentication instruction for executing an authentication process based on the digital certificate, and
by executing the machine code, the authentication process based on the digital certificate is realized by the authentication instruction.

3. The computing system according to claim 1 or 2,
wherein the intermediate code includes content, copyright management information for managing a copyright of the content, and a management instruction for executing copyright management based on the copyright management information, and
by executing the machine code, it is determined whether or not the content is available based on the copyright management information by the management instruction.

4. The computing system according to any one of claims 1 to 3,
wherein the second compiler includes a management module for updating data referenced by the second compiler.

5. The computing system according to any one of claims 1 to 4,
wherein the intermediate code includes auxiliary information for assisting generation of the machine code by the second compiler.

6. An information processing method executed in a computing system including a computing device including a processor and a software development device for creating an application program executed by the computing device, the method comprising:
a step in which the software development device compiles a source including one or more instructions and data to be processed to generate an intermediate code;
a step in which the computing device generates a machine code by reflecting a hardware configuration of the computing device in the one or more instructions included in the intermediate code; and
a step in which the processor of the computing device executes the generated machine code after the machine code is generated.
